# EUROPEAN PATENT APPLICATION

(11) **EP 3 225 507 A1**
(43) Date of publication of application: **04.10.2017**
(21) Application number: 17162218.6
(22) Date of filing: 22.03.2017
(51) Int. Cl.: B62D 5/00

(54) **CLUTCH, STEERING DEVICE, AND METHOD FOR PRODUCING CLUTCH**

(30) Priority: 29.03.2016 JP 2016066908
(71) Applicant: Showa Corporation, Gyoda City Saitama 361-8506 (JP)
(72) Inventor: SEKIKAWA, Shinsuke, Haga-gun, Tochigi 321-3325 (JP)
(74) Representative: Nordmeyer, Philipp Werner

(57) **Abstract**

A clutch (30) includes a sun gear (32), an internal gear (34), planetary gears (33), a carrier (35), a first area (R1), a second area (R2), and a third area (R3). The carrier (35) has a through hole (35A) through which an output shaft extends. The first area (R1) is disposed on an inner wall of the carrier (35) defining the through hole (35A). The second area (R2) is disposed on an outer surface of the output shaft and is spline-fitted to the first area (R1). The third area (R3) is disposed at a position that is on the outer surface of the output shaft and that is closer to the input shaft (105) than the second area (R2) is to the input shaft (105). The third area (R3) has a shape that makes the third area rotatable while being fitted to the first area (R1).

## Description

### BACKGROUND OF THE INVENTION

### FIELD OF THE INVENTION

The present invention relates to a clutch, a steering device, and a method for producing a clutch.

### DISCUSSION OF THE BACKGROUND

Japanese Unexamined Patent Application Publication No. 2008-189077 discloses a clutch generally used for a Steer-By-Wire (SBW) steering system. The clutch mechanically establishes and disestablishes a motive power transmission path between a steering member and a wheel-turning shaft.

The clutch disclosed in Japanese Unexamined Patent Application Publication No. 2008-189077 includes a planetary gear mechanism in which an input shaft is coupled to an internal gear, and an output shaft is coupled to a carrier. When a sun gear is locked, the input shaft and the output shaft are mechanically coupled to transmit rotation of the input shaft to the output shaft.

### SUMMARY OF THE INVENTION

According to one aspect of the present invention, a clutch is configured to mechanically establish and disestablish a torque transmission path between an input shaft through which a torque is input and an output shaft through which the torque is output. The clutch includes a sun gear, an internal gear, planetary gears, a carrier, a first area, a second area, and a third area. The sun gear is configured to switch between a fixed state and a non-fixed state. The internal gear is coupled to the input shaft in a torque transmittable manner.

The planetary gears are configured to mesh with the sun gear and the internal gear. The carrier is configured to rotatably support the planetary gears and is coupled to the output shaft in a torque transmittable manner. The carrier has a through hole through which the output shaft extends. The first area is disposed on an inner wall of the carrier defining the through hole. The second area is disposed on an outer surface of the output shaft and is spline-fitted to the first area. The third area is disposed at a position that is on the outer surface of the output shaft and that is closer to the input shaft than the second area is to the input shaft. The third area has a shape that makes the third area rotatable while being fitted to the first area.

According to another aspect of the present invention, a clutch is configured to mechanically establish and disestablish a torque transmission path between an input shaft through which a torque is input and an output shaft through which the torque is output. The clutch includes a sun gear, an internal gear, planetary gears, a carrier, a third area, a fourth area, and a first area. The sun gear is configured to switch between a fixed state and a non-fixed state. The internal gear is coupled to the input shaft in a torque transmittable manner. The planetary gears are configured to mesh with the sun gear and the internal gear. The carrier is configured to rotatably support the planetary gears and is coupled to the output shaft in a torque transmittable manner. The carrier has a through hole through which the output shaft extends. The third area is disposed on an outer surface of the output shaft. The fourth area is disposed on an inner wall of the carrier defining the through hole and is spline-fitted to the third area. The first area is disposed at a position that is on the inner wall of the carrier defining the through hole and is farther away from the input shaft than the fourth area is from the input shaft. The first area has a shape that makes the first area rotatable while being fitted to the third area.

According to another aspect of the present invention, a steering device includes a clutch configured to mechanically establish and disestablish a torque transmission path between an input shaft through which a torque is input and an output shaft through which the torque is output. The clutch includes a sun gear, an internal gear, planetary gears, a carrier, a first area, a second area, and a third area. The sun gear is configured to switch between a fixed state and a non-fixed state. The internal gear is coupled to the input shaft in a torque transmittable manner. The planetary gears are configured to mesh with the sun gear and the internal gear. The carrier is configured to rotatably support the planetary gears and is coupled to the output shaft in a torque transmittable manner. The carrier has a through hole through which the output shaft extends. The first area is disposed on an inner wall of the carrier defining the through hole. The second area is disposed on an outer surface of the output shaft and is spline-fitted to the first area. The third area is disposed at a position that is on the outer surface of the output shaft and that is closer to the input shaft than the second area is to the input shaft. The third area has a shape that makes the third area rotatable while being fitted to the first area.

According to the other aspect of the present invention, a method for producing a clutch configured to mechanically establish and disestablish a torque transmission path between an input shaft through which a torque is input and an output shaft through which the torque is output. The clutch includes a sun gear, an internal gear, planetary gears, a carrier, a first area, a second area, and a third area. The sun gear is configured to switch between a fixed state and a non-fixed state. The internal gear is coupled to the input shaft in a torque transmittable manner. The planetary gears are configured to mesh with the sun gear and the internal gear. The carrier is configured to rotatably support the planetary gears and is coupled to the output shaft in a torque transmittable manner. The carrier has a through hole through which the output shaft extends. The first area is disposed on an inner wall of the carrier defining the through hole. The second area is disposed on an outer surface of the output shaft and is spline-fitted to the first area. The third area is disposed at a position that is on the outer surface of the output shaft and that is closer to the input shaft than the second area is to the input shaft. The third area has a shape that makes the third area rotatable while being fitted to the first area. The method includes fitting the first area and the third area to each other. After the fitting step, a rotational angle of the carrier is adjusted relative to the output shaft. After the adjusting step, the output shaft and the carrier are spline-fitted to each other.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram illustrating a configuration of essential components of a steering device according to embodiment 1;
FIG. 2 is a perspective view of an internal configuration of a clutch and components surrounding it in embodiment 1;
FIG. 3 is a cross-sectional view of the clutch and components surrounding it in embodiment 1;
FIG. 4 is a cross-sectional view of a configuration of a carrier and components surrounding it in embodiment 1;
FIGs. 5(1) to 5(3) are vertical cross-sectional views illustrating steps of spline-fitting the carrier to a pinion shaft in embodiment 1;
FIGs. 6A to 6G are cross-sectional views of shapes of the carrier and the pinion shaft in embodiment 1;
FIGs. 7A to 7G are cross-sectional views of shapes of the carrier and the pinion shaft in embodiment 2;
FIGs. 8A to 8G are cross-sectional views of shapes of the carrier and the pinion shaft in embodiment 3;
FIGs. 9A to 9G are cross-sectional views of shapes of the carrier and the pinion shaft in embodiment 4;
FIGs. 10A to 10G are cross-sectional views of shapes of the carrier and the pinion shaft in embodiment 5;
FIGs. 11A to 11G are cross-sectional views of shapes of the carrier and the pinion shaft in embodiment 6;
FIGs. 12(1) to 12(3) are vertical cross-sectional views illustrating steps of spline-fitting the carrier to the pinion shaft in embodiment 7, and FIGs. 12A to 12E are cross-sectional views of shapes of the carrier and the pinion shaft in embodiment 7;
FIGs. 13(1) to 13(3) are vertical cross-sectional views illustrating steps of spline-fitting the carrier to the pinion shaft in embodiment 8, and FIGs. 13A to 13E are cross-sectional views of shapes of the carrier and the pinion shaft in embodiment 8;
FIG. 14 is a diagram illustrating one step of a method for producing the clutch according to one embodiment;
FIG. 15 is a diagram illustrating one step of the method for producing the clutch according to the embodiment; and
FIG. 16 is a diagram illustrating one step of the method for producing the clutch according to the embodiment.

### DESCRIPTION OF THE EMBODIMENTS

The embodiments will now be described with reference to the accompanying drawings, wherein like reference numerals designate corresponding or identical elements throughout the various drawings.

### Embodiment 1

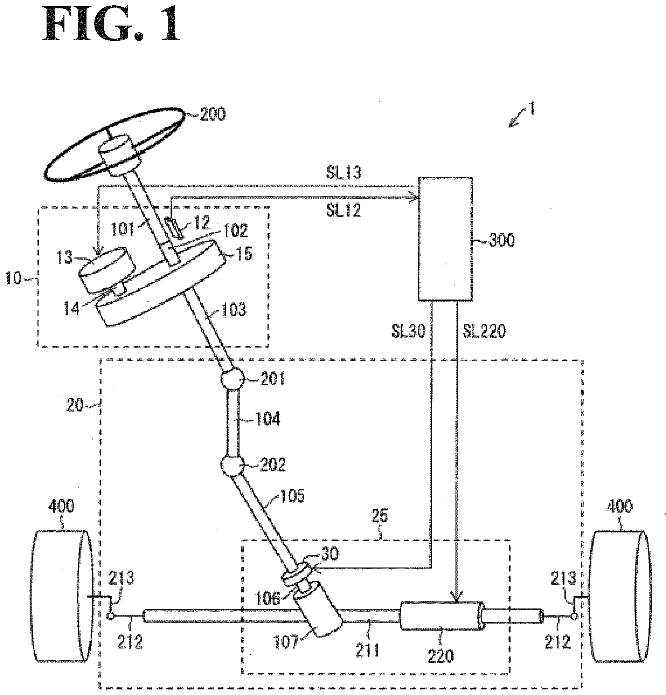

A steering device according to one embodiment will now be described with reference to FIG. 1. FIG. 1 is a diagram schematically illustrating a configuration of essential components of the steering device 1 according to embodiment 1. As illustrated in FIG. 1, the steering device 1 includes a steering unit 10, a wheel-turning unit 20, a steering member 200, and a controller 300. The steering device 1 is used for turning wheels 400 in accordance with the driver's steering operation through the steering member 200.

The steering device 1 according to embodiment 1 is a steer-by-wire steering device, which has at least two functions, namely a function of mechanically establishing and a disestablishing a torque transmission path between the steering member 200 and the wheel-turning unit 20, and a function of electrically controlling a turning angle of the wheels 400 in accordance with a steering operation through the steering member 200 in a state in which the torque transmission path is uncoupled.

As illustrated in FIG. 1, a steering wheel having a wheel shape is taken as an example of the steering member 200. This configuration, however, is not intended in a limiting sense. A device having other shape and mechanism may be used insofar as the device is capable of accepting a steering operation by the driver.

### Steering Unit 10

The steering unit 10 has both a function of accepting the driver's steering operation through the steering member 200 and a function of mechanically establishing and a disestablishing the torque transmission path between the steering member 200 and the wheel-turning unit 20. Also, the steering unit 10 has a function of generating reaction force with respect to the steering operation and transmitting the reaction force to the steering member 200.

As illustrated in FIG. 1, the steering unit 10 includes an upper steering shaft 101, an intermediate steering shaft 102, a lower steering shaft 103, a torque sensor 12, a motive power generator 13, a motive power transmission shaft 14, and a motive power transmitter 15.

In this description, the upper steering shaft 101, the intermediate steering shaft 102, and the lower steering shaft 103 will be occasionally referred to as "steering shaft" collectively.

Also, in this description, "upper end" will refer to an end portion on the upstream side in the transmission path of steering force in accordance with a steering operation by the driver (namely, an end on the input side) while "lower end" will refer to an end portion on the downstream side in the transmission path of steering force (namely, an end on the output side).

In embodiment 1, an upper end of the upper steering shaft 101 is coupled to the steering member 200 in a torque transmittable manner. In this description, "coupled in a torque transmittable manner" refers to coupling of a first member to a second member in such a manner that the second member rotates in accordance with rotation of the first member. For example, its signification at least includes a case where the first member and the second member are integral to each other, a case where the second member is directly or indirectly secured to the first member, and a case where the first member and the second member are coupled to each other through a component such as a joint in such a manner that the first member and the second member operate in conjunction with each other.

In embodiment 1, the upper end of the upper steering shaft 101 is secured to the steering member 200 in such a manner that the steering member 200 and the upper steering shaft 101 integrally rotate.

The upper steering shaft 101 and the intermediate steering shaft 102 are coupled to each other in a torque transmittable manner and elastically. The torque sensor 12 detects torsion caused between the upper steering shaft 101 and the intermediate steering shaft 102.

Specifically, the upper steering shaft 101 and the intermediate steering shaft 102 each have a cavity inside although not illustrated. A torsion bar is disposed in the cavities to elastically couple the upper steering shaft 101 and the intermediate steering shaft 102. When the driver performs a steering operation through the steering member 200, a torsion angle *θ_{T}* is caused between the upper steering shaft 101 and the intermediate steering shaft 102 in accordance with the magnitude of a torque *T* of the steering operation. Then, the torque sensor 12 detects this torsion angle *θ_{T}* and outputs to the controller 300 a torque sensor signal SL12 indicating a detection result. It is noted that the steering unit 10 may include a steering angle sensor to detect a steering angle of the steering member 200, for example, so as to output to the controller 300 a signal indicating a steering angle or a steering angle speed detected.

The motive power generator 13 applies a torque to the motive power transmission shaft 14 in accordance with a torque control signal SL13 output from the controller 300.

In a non-limiting embodiment, the motive power generator 13 may be a motor main body, and the motive power transmission shaft 14 may be a motor output shaft that penetrates the motor main body and is rotated by the motor main body. The motive power transmission shaft 14 may be another shaft coupled to the motor output shaft in a torque transmittable manner.

The motive power transmitter 15 is coupled to the motive power transmission shaft 14 in a torque transmittable manner with respect to the motive power transmission shaft 14. The motive power transmitter 15 is coupled to the intermediate steering shaft 102 in a torque transmittable manner.

The motive power transmitter 15 is a motive power transmission mechanism to transmit torque between the motive power transmission shaft 14 and the intermediate steering shaft 102. As the motive power transmitter 15, for example, gear-drive, belt-drive, chain-drive, friction-drive, and traction-drive motive power transmission mechanisms or a combination of these motive power transmission mechanisms may be used. The gear-drive motive power transmission mechanism may include, for example, helical gears, planetary gears, and a combination of a worm gear and a worm wheel. The friction-drive motive power transmission mechanism and the traction-drive motive power transmission mechanism may include, for example, planetary rollers. The motive power transmitter 15 may not necessarily include reduction gears.

With the above-described configuration, the torque generated by the motive power generator 13 is transmitted to the intermediate steering shaft 102 through the motive power transmission shaft 14 and the motive power transmitter 15.

### Controller 300

The controller 300 controls wheel-turning force generated by a wheel-turning force generator 220 and torque generated by the motive power generator 13 in accordance with a steering operation by the driver.

Specifically, referring to the torque sensor signal SL12 output from the torque sensor 12, the controller 300 generates the torque control signal SL13 for controlling the torque generated by the motive power generator 13 and a wheel-turning force control signal SL220 for controlling the wheel-turning force generated by the wheel-turning force generator 220. The controller 300 respectively outputs the torque control signal SL13 and the wheel-turning force control signal SL220 to the motive power generator 13 and the wheel-turning force generator 220.

The controller 300 may further refer to such signals as a signal indicating a steering angle of the steering member 200 and a vehicle speed signal from a vehicle speed sensor so as to generate the torque control signal SL13 and the wheel-turning force control signal SL220.

The controller 300 outputs the clutch control signal SL30 to the clutch 30 so as to control switching between a coupled state and an uncoupled state of the clutch 30.

When the clutch 30 is in the uncoupled state, the controller 300 controls the motive power generator 13 to generate a reaction force with respect to a steering operation by the driver. Specifically, the controller 300 controls the motive power generator 13 to transmit to the steering shaft a reaction force torque in a reverse direction to the driver's steering torque input through the steering member 200. This enables the driver to obtain a tactile response to the steering operation.

The specific control method of the clutch 30 by the controller 300 should not limit embodiment 1. For example, the controller 300 may be arranged to switch the clutch 30 to the coupled state in such an occasion as when some malfunction occurs in the steering device 1 and at the time of ignition off. With this configuration, at the time of occurrence of malfunction and ignition off, it is possible for the driver to turn the wheels 400 even without passing through an electric path.

When the clutch 30 is in the coupled state, the controller 300 may be arranged to control the motive power generator 13 in such a manner that torque in the same direction as the driver's steering torque input through the steering member 200 is transmitted to the steering shaft. Thus, even in the coupled state of the clutch 30, it is possible for the driver to perform the steering operation without requiring large force.

### Wheel-Turning Unit 20

The wheel-turning unit 20 is arranged to turn the wheels 400 in accordance with a steering operation by the driver which has been accepted by the steering unit 10.

As illustrated in FIG. 1, the wheel-turning unit 20 includes a first universal joint 201, an intermediate shaft 104, a second universal joint 202, an input shaft (input shaft) 105, the clutch 30, a pinion shaft (output shaft) 106, a pinion gear 107, a rack shaft (wheel-turning shaft) 211, tie rods 212, knuckle arms 213, and the wheel-turning force generator 220.

A downstream side of the input shaft 105, the clutch 30, the pinion shaft 106, the pinion gear 107, part of the rack shaft 211, and the wheel-turning force generator 220 are accommodated in a pinion box 25. In embodiment 1, the pinion shaft 106 includes a single member. This configuration, however, should not be construed in a limiting sense. The pinion shaft 106 may include a plurality of members.

An upper end of the intermediate shaft 104 is coupled to a lower end of the lower steering shaft 103 through the first universal joint 201 in a torque transmittable manner.

A lower end of the intermediate shaft 104 is coupled to an upper end of the input shaft 105 through the second universal joint 202 in a torque transmittable manner.

The pinion gear 107 is coupled to a lower end of the pinion shaft 106 in a torque transmittable manner with respect to the pinion shaft 106. Specifically, the pinion gear 107 is secured to the pinion shaft 106 to make the pinion shaft 106 and the pinion gear 107 integrally rotate.

In embodiment 1, a rack to mesh with the pinion gear 107 is formed on a portion of the rack shaft 211 that is opposed to the pinion gear 107.

In embodiment 1, the clutch 30 is coupled to a lower end of the input shaft 105. The clutch 30 mechanically establishes and disestablishes the torque transmission path between the steering member 200 and the wheel-turning unit 20 in accordance with a clutch control signal SL30 output from the controller 300. Specifically, the clutch 30 mechanically establishes and disestablishes torque transmission between the lower end of the input shaft 105 and the upper end of the pinion shaft 106 in accordance with the clutch control signal SL30.

In embodiment 1, when the clutch 30 is in the coupled state, the driver's steering operation through the steering member 200 causes the pinion gear 107 to rotate to displace the rack shaft 211 in the axial direction.

Meanwhile, when the clutch 30 is in the uncoupled state, the wheel-turning force generator 220 generates wheel-turning force in accordance with the wheel-turning force control signal SL220 from the controller 300 so as to displace the rack shaft 211 in the axial direction.

When the rack shaft 211 is displaced in the axial direction, the wheels 400 are turned through the tie rods 212 on both ends of the rack shaft 211 and the knuckle arms 213 coupled to the tie rods 212. The present invention, however, should not be limited to the configuration in which the wheel-turning shaft is displaced by the rack pinion mechanism. The wheel-turning shaft may be displaced by other mechanisms (such as a ball screw mechanism).

It is noted that the specific configuration of the wheel-turning force generator 220 should not limit embodiment 1. The wheel-turning force generator 220 may have the following configuration, for example.

### Wheel-Turning Force Generator 220

The wheel-turning force generator 220 may include a motor (not illustrated) and a conversion mechanism to convert rotation of the output shaft of the motor into linear movement of the rack shaft 211 in the axial direction. What is called a ball screw mechanism may be used as the conversion mechanism. The ball screw mechanism includes, for example, a nut (not illustrated), a rack-shaft helical groove (not illustrated), and a plurality of rolling balls (not illustrated). The nut has an inner surface in which a nut helical groove is formed. The nut is rotated by the motor. The rack-shaft helical groove is formed in an outer surface of the rack shaft 211 and has the same pitch as the nut helical groove. The plurality of rolling balls are clamped between the nut helical groove and the helical groove of the rack shaft 211.

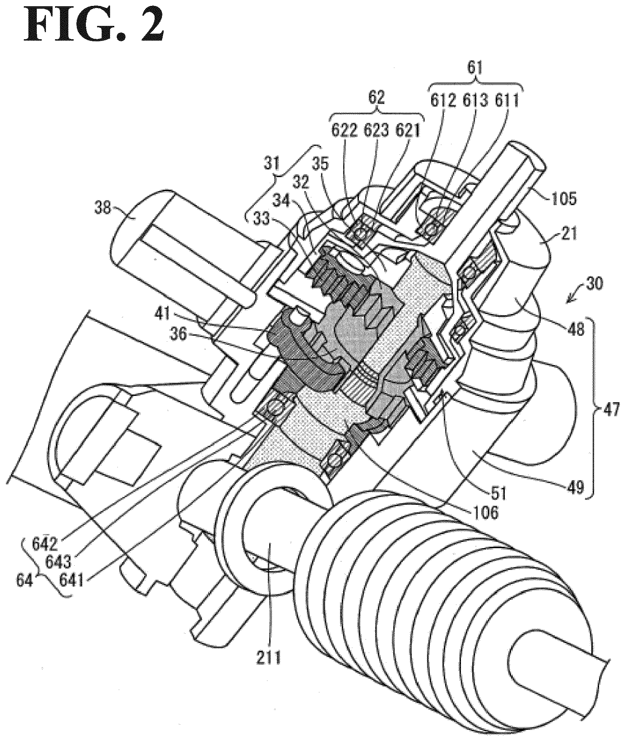

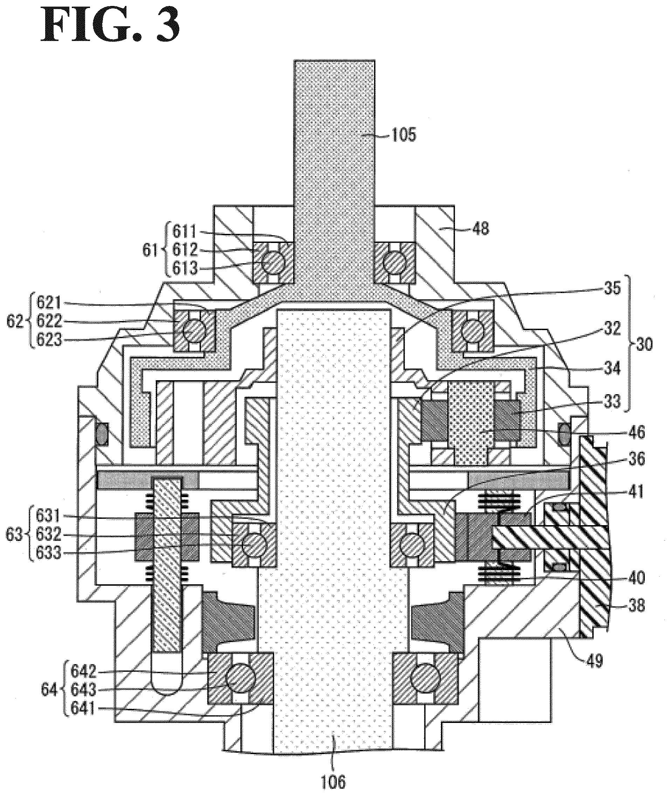

Next, by referring to FIGs. 2 and 3, a configuration of the clutch 30 and components surrounding it will be described in detail. FIG. 2 is a perspective view of an internal configuration of the clutch 30 and the components surrounding it illustrated in FIG. 1. FIG. 3 is a cross-sectional view of the clutch 30 and the components surrounding it.

As illustrated in FIGs. 2 and 3, the clutch 30 according to embodiment 1 includes a housing 47. The housing 47 is hollow and includes a first housing 48 and a second housing 49. The first housing 48 is disposed on the steering unit 10 (see FIG. 1) side. The second housing 49 is disposed on the wheel-turning unit 20 (see FIG. 1) side. The first housing 48 is detachably attached to the second housing 49. When the first housing 48 is detached from the second housing 49, an opening 51 of the second housing 49 is exposed.

Part of the input shaft 105, part of the pinion shaft 106, a planetary gear mechanism 31, a first bearing 61, and a second bearing 62 are accommodated in the first housing 48.

Meanwhile, other part of the pinion shaft 106, a lock wheel 36, a lever 41, a third bearing 63, and a fourth bearing 64 are accommodated in the second housing 49. Configuration of Planetary Gear Mechanism 31

The planetary gear mechanism 31 according to embodiment 1 includes a sun gear 32, a plurality of planetary gears 33, an internal gear 34, and a carrier 35. The carrier 35 supports the planetary gears 33 through pins 46. The sun gear 32 is disposed on an outer circumferential side of the pinion shaft 106 and coupled to the lock wheel 36 in a torque transmittable manner. The planetary gears 33 are disposed on an outer circumferential side of the sun gear 32 and on an inner circumferential side of the internal gear 34 so as to mesh with the sun gear 32 and the internal gear 34. The internal gear 34 is coupled to the input shaft 105 in a torque transmittable manner. The carrier 35 rotatably supports the planetary gears 33 and spline-fitted to an end portion of the pinion shaft 106 on the input shaft 105 side. Configuration of Lever 41

The lever 41 according to embodiment 1 is displaced between a first position and a second position. In embodiment 1, when a plunger (not illustrated) is pressed against the lever 41 by a function of a solenoid 38 connected to the second housing 49, the lever 41 is driven and displaced to the first position and becomes separate from the lock wheel 36. Thus, the lock wheel 36 and the sun gear 32 shift to a non-fixed state (rotatable state). This mechanically disestablishes the torque transmission path between the input shaft 105 and the pinion shaft 106. It is noted that when the lever 41 is displaced to the first position, a stopper pin (not illustrated) is brought into contact with the lever 41 and prevents the lever 41 from being further displaced.

The lever 41 is biased to the second position by a spring 40 disposed in the second housing 49. When the lever 41 is displaced to the second position, the lever 41 is engaged with a groove of the lock wheel 36. Then, the lock wheel 36 and the sun gear 32 become fixed (unrotatable state). This mechanically establishes the torque transmission path between the input shaft 105 and the pinion shaft 106.

### First to Fourth Bearings 61 to 64

Next, the first to fourth bearings 61 to 64 will be described specifically. The first bearing 61 includes an inner race (shaft washer) 611, an outer race (housing washer) 612, and a plurality of rolling elements 613. The rolling elements 613 are disposed between the inner race 611 and the outer race 612. The second bearing 62 includes an inner race 621, an outer race 622, and a plurality of rolling elements 623. The rolling elements 623 are disposed between the inner race 621 and the outer race 622. The inner races 611 and 621 are arranged to rotate with the input shaft 105. Meanwhile, the outer races 612 and 622 are secured to the first housing 48.

The third bearing 63 includes an inner race 631, an outer race 632, and a plurality of rolling elements 633. The rolling elements 633 are disposed between the inner race 631 and the outer race 632. The fourth bearing 64 includes an inner race 641, an outer race 642, and a plurality of rolling elements 643. The rolling elements 643 are disposed between the inner race 641 and the outer race 642. The inner races 631 and 641 are arranged to rotate with the pinion shaft 106. Meanwhile, the outer races 632 and 642 are each secured to the second housing 49.

### Detailed Configurations of Carrier 35 and Pinion Shaft 106

Next, a configuration of the carrier 35 and the pinion shaft 106 according to embodiment 1 will be described in detail.

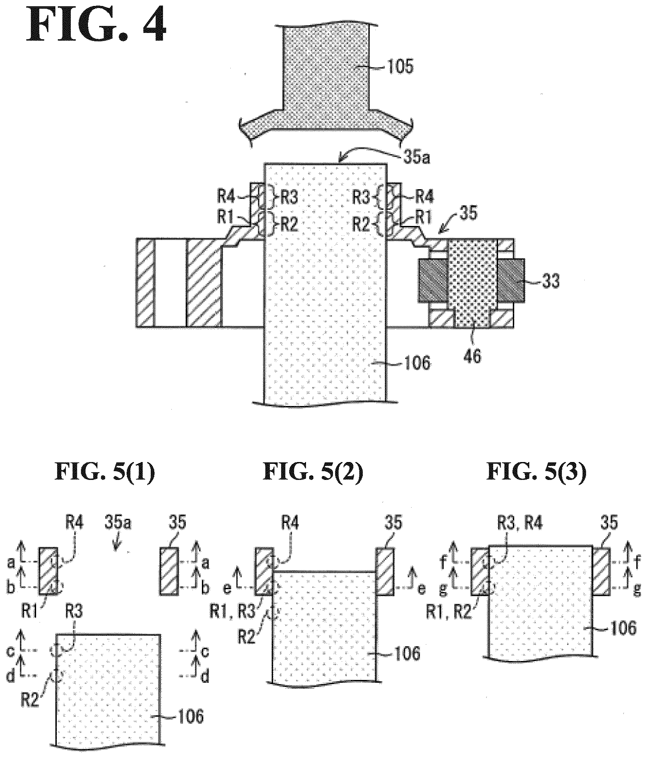

FIG. 4 is a cross-sectional view of the configuration of the carrier 35 and the components surrounding it in embodiment 1. As illustrated in FIG. 4, the carrier 35 includes a through hole 35a through which the pinion shaft 106 extends. An inner wall of the carrier 35 that defines the through hole 35a includes a first area R1. An outer surface of the pinion shaft 106 includes a second area R2 opposed to the first area R1. The outer surface of the pinion shaft 106 also includes a third area R3 at a position closer to the input shaft 105 than the second area R2 is to the input shaft 105. The inner wall of the carrier 35 that defines the through hole 35a includes a fourth area R4 opposed to the third area R3. The fourth area R4 is at a position closer to the input shaft 105 than the first area R1 is to the input shaft 105. In embodiment 1, the third area R3 and the fourth area R4 are spline-fitted to each other. In this description, spline-fitted will refer to coupled in a torque transmittable manner while radial movement and rotation are restricted.

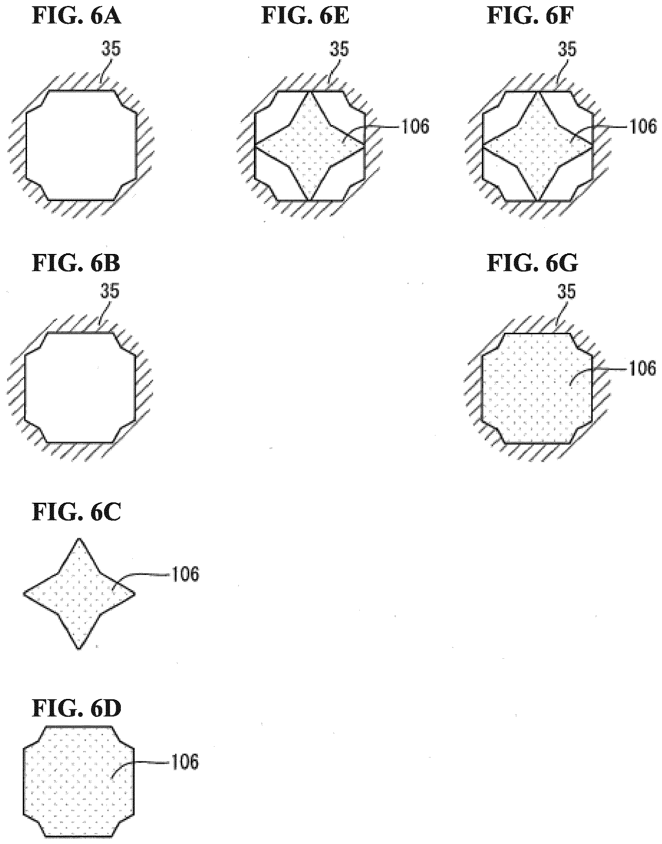

FIGs. 5(1) to 5(3) are vertical cross-sectional views illustrating steps of spline-fitting of the carrier 35 and the pinion shaft 106 according to embodiment 1. FIGs. 6A to 6G, which correspond to FIGs. 5(1) to 5(3), are cross-sectional views illustrating shapes of the carrier 35 and the pinion shaft 106.

FIG. 5(1) illustrates a stage before the carrier 35 and the pinion shaft 106 are spline-fitted to each other. FIG. 5(2) illustrates an intermediate stage while the carrier 35 and the pinion shaft 106 are being spline-fitted to each other (hereinafter referred to as "first stage fitting"). FIG. 5(3) illustrates a stage when the carrier 35 and the pinion shaft 106 are spline-fitted to each other (hereinafter referred to as "second stage fitting"). FIGs. 6A to 6G respectively correspond to cross-sectional views taken along the lines a-a to g-g in FIGs. 5(1) to 5(3).

In embodiment 1, the fourth area R4 of the inner wall of the carrier 35 that defines the through hole 35a has a shape illustrated in FIG. 6A. The first area R1 of the inner wall of the carrier 35 that defines the through hole 35a has the same shape as the fourth area R4, as illustrated in FIG. 6B. The third area R3 of the outer surface of the pinion shaft 106 has a shape illustrated in FIG. 6C. The second area R2 of the outer surface of the pinion shaft 106 has a shape different from the shape of the third area R3, as illustrated in FIG. 6D.

### First Stage Fitting

Next, the above-described first stage fitting will be described. FIG. 6E illustrates a state in which the third area R3 and the first area R1 are fitted to each other. As illustrated in FIG. 6E, the first area R1 of the carrier 35 has a shape to be fitted to the third area R3 of the pinion shaft 106 so as to be rotatable about the axis of the pinion shaft 106. In other words, in the first stage fitting, rotation of the carrier 35 relative to the pinion shaft 106 is allowed. Preferably, the first area R1 of the carrier 35 should have a shape to be fitted to the third area R3 of the pinion shaft 106 so as to restrict movement in a radial direction of the pinion shaft 106.

### Second Stage Fitting

Next, the above-described second stage fitting will be described. FIG. 6F illustrates a state in which the third area R3 and the fourth area R4 are fitted to each other. FIG. 6G illustrates a state in which the first area R1 and the second area R2 are fitted to each other. As illustrated in FIG. 6F, fitting between the third area R3 and the fourth area R4 is the same as fitting between the third area R3 and the first area R1. As illustrated in FIG. 6G, however, the first area R1 and the second area R2 are fitted not to allow movement in the radial direction of the pinion shaft 106 and not to allow rotation about the axis of the pinion shaft 106. Thus, the carrier 35 can be spline-fitted to the pinion shaft 106 and coupled in a torque transmittable manner.

As described above, in embodiment 1, when the carrier 35 is spline-fitted to the pinion shaft 106, the carrier 35 is first fitted to the pinion shaft 106 so as to be rotatable in the first stage fitting, and then, the carrier 35 is fitted to the pinion shaft 106 in a torque transmittable manner in the second stage fitting. Since the carrier 35 is rotatable in a state of the first stage fitting, the planetary gears 33 can be readily positioned. Consequently, while the planetary gears 33 supported by the carrier 35 are positioned, the carrier 35 can be readily spline-fitted to the pinion shaft 106. This facilitates production of the clutch 30.

The configuration of the carrier 35 and the pinion shaft 106 according to embodiment 1 should not be limited to the above-described configuration insofar as at least the first area R1 of the carrier 35 has such a shape as to be rotatably fitted to the third area R3 of the pinion shaft 106. In view of this, other configurations of the carrier 35 and the pinion shaft 106 will be described below. It is noted that carriers and pinion shafts described below are common with embodiment 1 except that cross-sectional shapes of the carriers and the pinion shafts are different from the cross-sectional shapes of the carrier and the pinion shaft according to embodiment 1. For ease of description, the same components already described will be denoted with the same reference numerals below.

### Embodiment 2

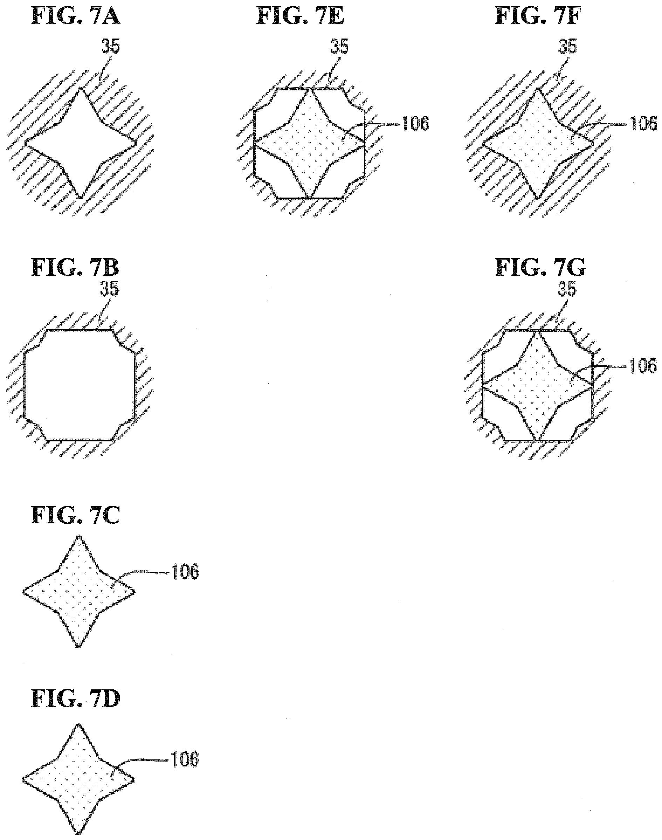

FIGs. 7A to 7G are cross-sectional views of shapes of a carrier and a pinion shaft according to embodiment 2. FIGs. 7A to 7G respectively correspond to cross-sectional views taken along the lines a-a to g-g in FIGs. 5(1) to 5(3).

In embodiment 2, the fourth area R4 of the inner wall of the carrier 35 that defines the through hole 35a has a shape illustrated in FIG. 7A. The first area R1 of the inner wall of the carrier 35 that defines the through hole 35a has a shape different from the shape of the fourth area R4, as illustrated in FIG. 7B. The third area R3 of the outer surface of the pinion shaft 106 has a shape illustrated in FIG. 7C. The second area R2 of the outer surface of the pinion shaft 106 has the same shape as the third area R3, as illustrated in FIG. 7D.

### First Stage Fitting

Next, first stage fitting in embodiment 2 will be described. FIG. 7E illustrates a state in which the third area R3 and the first area R1 are fitted to each other. As illustrated in FIG. 7E, a relationship between the first area R1 of the carrier 35 and the third area R3 of the pinion shaft 106 is the same as in embodiment 1.

### Second Stage Fitting

Next, second stage fitting in embodiment 2 will be described. FIG. 7F illustrates a state in which the third area R3 and the fourth area R4 are fitted to each other. FIG. 7G illustrates a state in which the first area R1 and the second area R2 are fitted to each other. As illustrated in FIG. 7G, fitting between the first area R1 and the second area R2 is the same as fitting between the third area R3 and the first area R1. As illustrated in FIG. 7F, however, the third area R3 and the fourth area R4 are fitted not to allow movement in the radial direction of the pinion shaft 106 and not to allow rotation about the axis of the pinion shaft 106. Thus, the carrier 35 can be spline-fitted to the pinion shaft 106 and coupled in a torque transmittable manner.

As described above, in embodiment 2, in a similar manner to embodiment 1, when the carrier 35 is spline-fitted to the pinion shaft 106, the carrier 35 is first fitted to the pinion shaft 106 so as to be rotatable in the first stage fitting, and then, the carrier 35 is fitted to the pinion shaft 106 in a torque transmittable manner in the second stage fitting. Thus, the same effect as embodiment 1 can be obtained.

### Embodiment 3

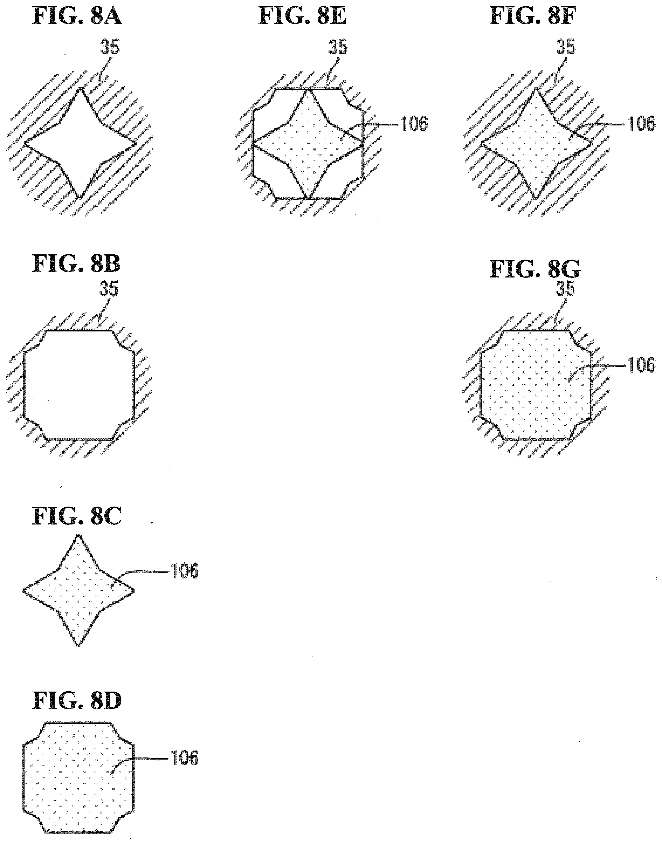

FIGs. 8A to 8G are cross-sectional views of shapes of a carrier and a pinion shaft according to embodiment 3. FIGs. 8A to 8G respectively correspond to cross-sectional views taken along the lines a-a to g-g in FIGs. 5(1) to 5(3).

In embodiment 3, the fourth area R4 of the inner wall of the carrier 35 that defines the through hole 35a has a shape illustrated in FIG. 8A. The first area R1 of the inner wall of the carrier 35 that defines the through hole 35a has a shape different from the shape of the fourth area R4, as illustrated in FIG. 8B. The third area R3 of the outer surface of the pinion shaft 106 has a shape illustrated in FIG. 8C. The second area R2 of the outer surface of the pinion shaft 106 has a shape different from the shape of the third area R3, as illustrated in FIG. 8D.

### First Stage Fitting

Next, first stage fitting in embodiment 3 will be described. FIG. 8E illustrates a state in which the third area R3 and the first area R1 are fitted to each other. As illustrated in FIG. 8E, a relationship between the first area R1 of the carrier 35 and the third area R3 of the pinion shaft 106 is the same as in embodiment 1.

### Second Stage Fitting

Next, second stage fitting in embodiment 3 will be described. FIG. 8F illustrates a state in which the third area R3 and the fourth area R4 are fitted to each other. FIG. 8G illustrates a state in which the first area R1 and the second area R2 are fitted to each other. As illustrated in FIG. 8F, the third area R3 and the fourth area R4 are fitted not to allow movement in the radial direction of the pinion shaft 106 and not to allow rotation about the axis of the pinion shaft 106. As illustrated in FIG. 8G, the first area R1 and the second area R2 are fitted not to allow movement in the radial direction of the pinion shaft 106 and not to allow rotation about the axis of the pinion shaft 106. Thus, the carrier 35 can be spline-fitted to the pinion shaft 106 and coupled in a torque transmittable manner. Particularly in embodiment 3, not only the third area R3 and the fourth area R4 but also the first area R1 and the second area R2 are spline-fitted to each other, and consequently, the carrier 35 can be fast coupled to the pinion shaft 106.

As described above, in embodiment 3, in a similar manner to embodiment 1, when the carrier 35 is spline-fitted to the pinion shaft 106, the carrier 35 is first fitted to the pinion shaft 106 so as to be rotatable in the first stage fitting, and then, the carrier 35 is fitted to the pinion shaft 106 in a torque transmittable manner in the second stage fitting. Thus, the same effect as embodiment 1 can be obtained.

### Embodiment 4

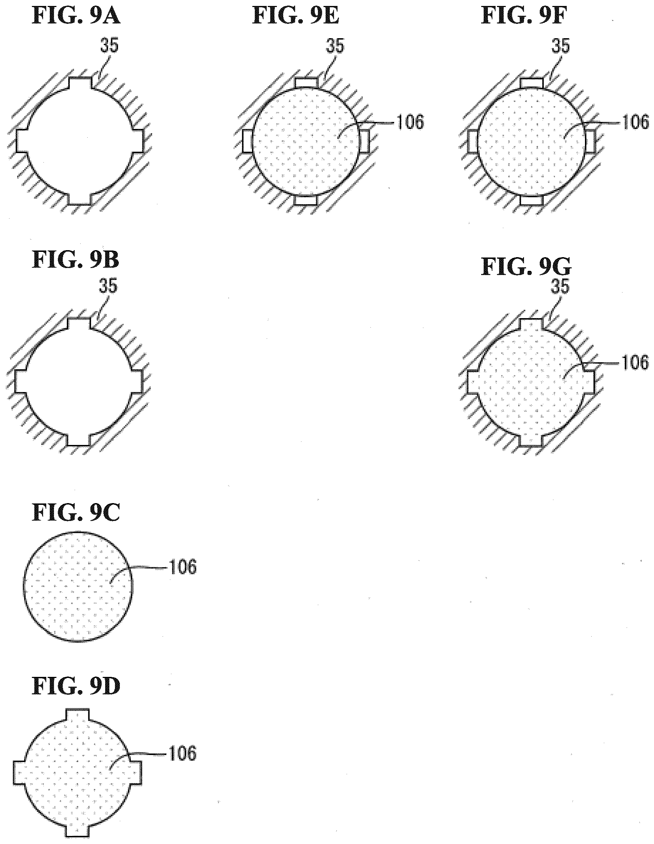

FIGs. 9A to 9G are cross-sectional views of shapes of a carrier and a pinion shaft according to embodiment 4. FIGs. 9A to 9G respectively correspond to cross-sectional views taken along the lines a-a to g-g in FIGs. 5(1) to 5(3). In embodiment 4, in a similar manner to embodiment 1, when the carrier 35 is spline-fitted to the pinion shaft 106, the carrier 35 is first fitted to the pinion shaft 106 so as to be rotatable in the first stage fitting, as illustrated in FIG. 9E, and then, the carrier 35 is fitted to the pinion shaft 106 in a torque transmittable manner in the second stage fitting, as illustrated in FIG. 9G. Thus, the same effect as embodiment 1 can be obtained.

### Embodiment 5

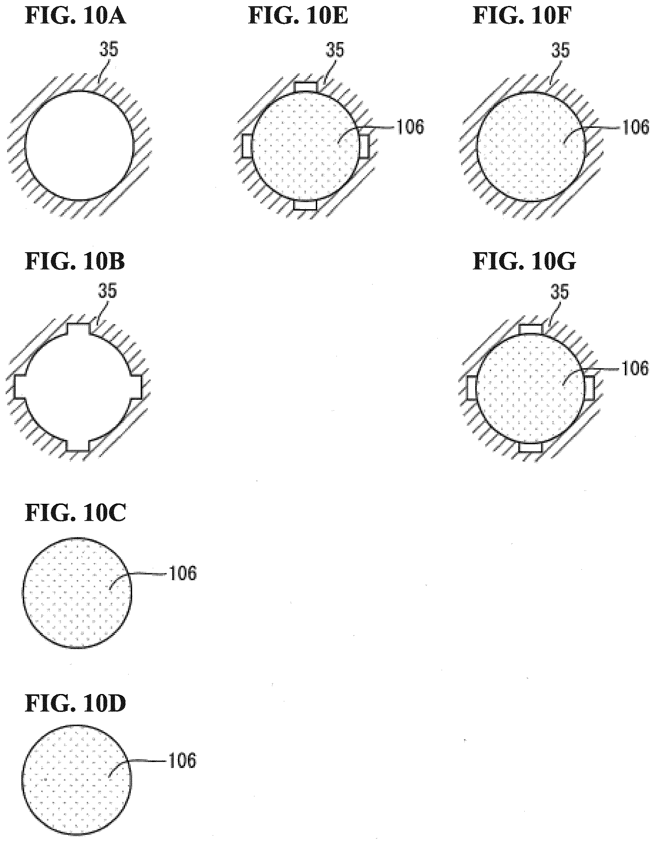

FIGs. 10A to 10G are cross-sectional views of shapes of a carrier and a pinion shaft according to embodiment 5. FIGs. 10A to 10G respectively correspond to cross-sectional views taken along the lines a-a to g-g in FIGs. 5(1) to 5(3). In embodiment 5, in a similar manner to embodiment 2, when the carrier 35 is spline-fitted to the pinion shaft 106, the carrier 35 is first fitted to the pinion shaft 106 so as to be rotatable in the first stage fitting, as illustrated in FIG. 10E, and then, the carrier 35 is fitted to the pinion shaft 106 in a torque transmittable manner in the second stage fitting, as illustrated in FIG. 10F. Thus, the same effect as embodiment 1 can be obtained.

### Embodiment 6

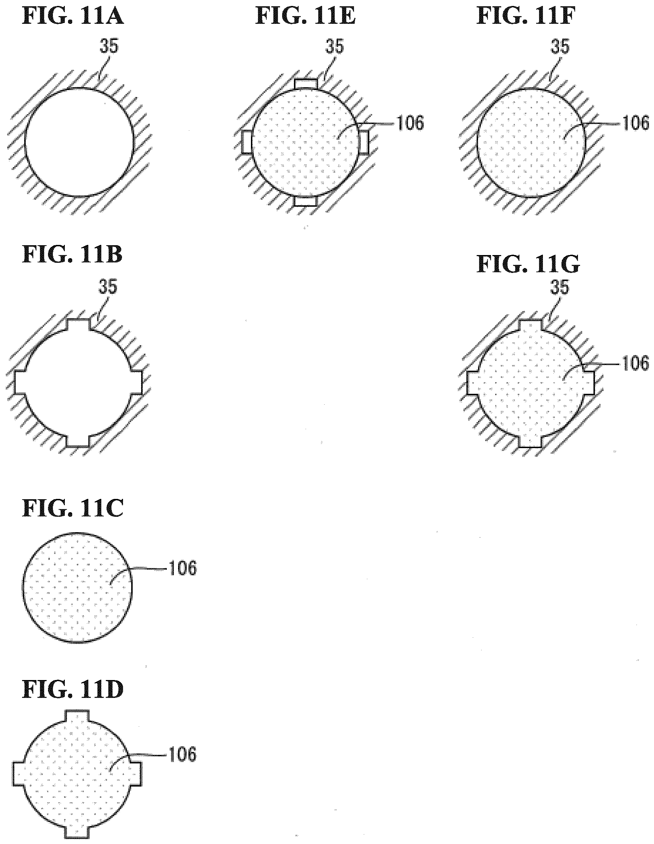

FIGs. 11A to 11G are cross-sectional views of shapes of a carrier and a pinion shaft according to embodiment 6. FIGs. 11A to 11G respectively correspond to cross-sectional views taken along the lines a-a to g-g in FIGs. 5(1) to 5(3). In embodiment 6, in a similar manner to embodiment 3, when the carrier 35 is spline-fitted to the pinion shaft 106, the carrier 35 is first fitted to the pinion shaft 106 so as to be rotatable in the first stage fitting, as illustrated in FIG. 11E, and then, the carrier 35 is fitted to the pinion shaft 106 in a torque transmittable manner in the second stage fitting, as illustrated in FIGs. 11F and 11G. Thus, the same effect as embodiment 1 can be obtained.

### Embodiment 7

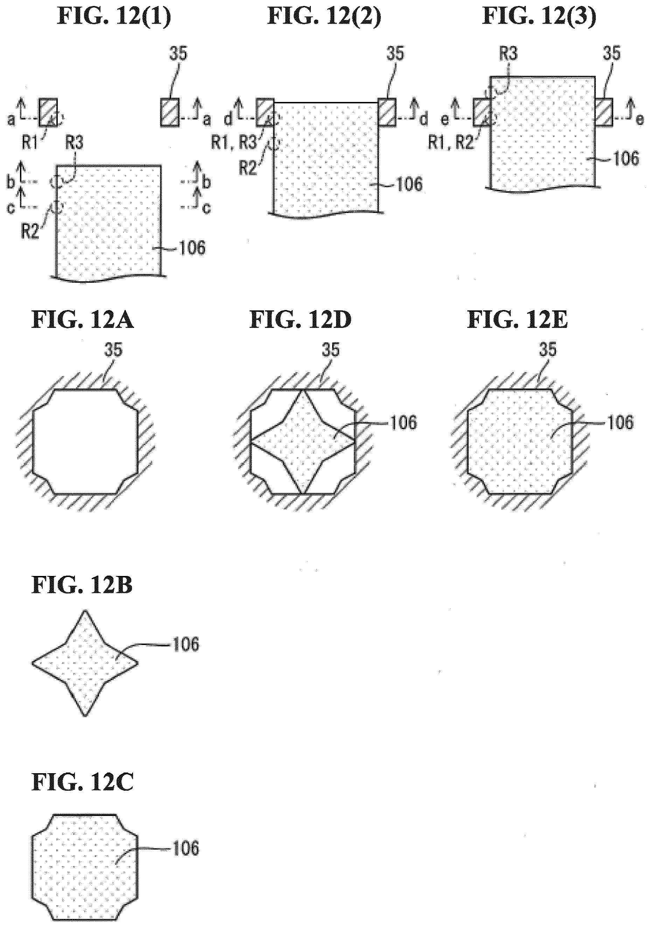

The inner wall of the carrier 35 that defines the through hole 35a may only include the first area R1 and may not necessarily include the fourth area R4. FIGs. 12(1) to 12(3) are vertical cross-sectional views illustrating steps of spline-fitting a carrier and a pinion shaft according to embodiment 7. FIGs. 12A to 12E are cross-sectional views of shapes of the carrier and the pinion shaft. FIG. 12(1) illustrates a stage before the carrier 35 and the pinion shaft 106 are spline-fitted to each other. FIG. 12(2) illustrates an intermediate stage while the carrier 35 and the pinion shaft 106 are being spline-fitted to each other ("first stage fitting"). FIG. 12(3) illustrates a stage when the carrier 35 and the pinion shaft 106 are spline-fitted to each other ("second stage fitting"). FIGs. 12A to 12E respectively correspond to cross-sectional views taken along the lines a-a to e-e in FIGs. 12(1) to 12(3).

In embodiment 7, the first area R1 of the inner wall of the carrier 35 that defines the through hole 35a has a shape illustrated in FIG. 12A. The third area R3 of the outer surface of the pinion shaft 106 has a shape illustrated in FIG. 12B. The second area R2 of the outer surface of the pinion shaft 106 has a shape different from the shape of the third area R3, as illustrated in FIG. 12C.

### First Stage Fitting

Next, first stage fitting in embodiment 7 will be described. FIG. 12D illustrates a state in which the third area R3 and the first area R1 are fitted to each other. As illustrated in FIG. 12D, a relationship between the first area R1 of the carrier 35 and the third area R3 of the pinion shaft 106 is the same as in embodiment 1.

### Second Stage Fitting

Next, second stage fitting in embodiment 7 will be described. FIG. 12E illustrates a state in which the first area R1 and the second area R2 are fitted to each other. As illustrated in FIG. 12E, the first area R1 and the second area R2 are fitted not to allow movement in the radial direction of the pinion shaft 106 and not to allow rotation about the axis of the pinion shaft 106. Thus, the carrier 35 can be spline-fitted to the pinion shaft 106 and coupled in a torque transmittable manner.

As described above, in embodiment 7, when the carrier 35 is spline-fitted to the pinion shaft 106, the carrier 35 is first fitted to the pinion shaft 106 so as to be rotatable in the first stage fitting, and then, the carrier 35 is fitted to the pinion shaft 106 in a torque transmittable manner in the second stage fitting. Thus, the same effect as embodiment 1 can be obtained.

### Embodiment 8

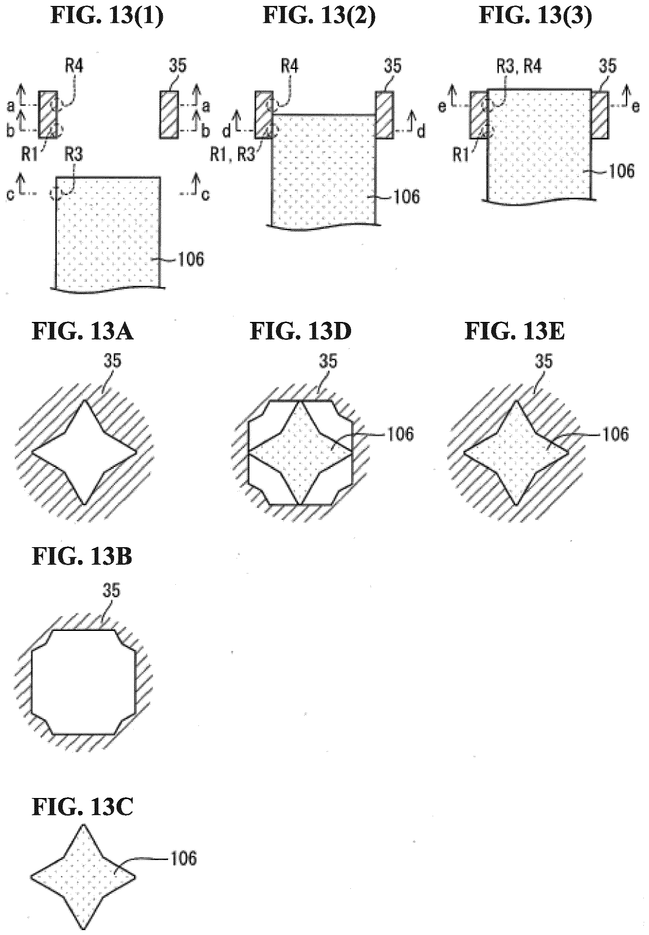

The outer surface of the pinion shaft 106 may only include the third area R3 and may not necessarily include the second area R2. FIGs. 13(1) to 13(3) are vertical cross-sectional views illustrating steps of spline-fitting a carrier and a pinion shaft according to embodiment 8. FIGs. 13A to 13E are cross-sectional views of shapes of the carrier and the pinion shaft. FIG. 13(1) illustrates a stage before the carrier 35 and the pinion shaft 106 are spline-fitted to each other. FIG. 13(2) illustrates an intermediate stage while the carrier 35 and the pinion shaft 106 are being spline-fitted to each other ("first stage fitting"). FIG. 13(3) illustrates a stage when the carrier 35 and the pinion shaft 106 are spline-fitted to each other ("second stage fitting"). FIGs. 13A to 13E respectively correspond to cross-sectional views taken along the lines a-a to e-e in FIGs. 13(1) to 13(3).

In embodiment 8, the fourth area R4 of the inner wall of the carrier 35 that defines the through hole 35a has a shape illustrated in FIG. 13A. The first area R1 of the inner wall of the carrier 35 that defines the through hole 35a has a shape different from the shape of the fourth area R4, as illustrated in FIG. 13B. The third area R3 of the outer surface of the pinion shaft 106 has a shape illustrated in FIG. 13C.

### First Stage Fitting

Next, first stage fitting in embodiment 8 will be described. FIG. 13D illustrates a state in which the third area R3 and the first area R1 are fitted to each other. As illustrated in FIG. 13D, a relationship between the first area R1 of the carrier 35 and the third area R3 of the pinion shaft 106 is the same as in embodiment 1.

### Second Stage Fitting

Next, second stage fitting in embodiment 8 will be described. FIG. 13E illustrates a state in which the third area R3 and the fourth area R4 are fitted to each other. As illustrated in FIG. 13E, the third area R3 and the fourth area R4 are fitted not to allow movement in the radial direction of the pinion shaft 106 and not to allow rotation about the axis of the pinion shaft 106. Thus, the carrier 35 can be spline-fitted to the pinion shaft 106 and be coupled in a torque transmittable manner.

As described above, in embodiment 8, when the carrier 35 is spline-fitted to the pinion shaft 106, the carrier 35 is first fitted to the pinion shaft 106 so as to be rotatable in the first stage fitting, and then, the carrier 35 is fitted to the pinion shaft 106 in a torque transmittable manner in the second stage fitting. Thus, the same effect as embodiment 1 can be obtained.

### Method for producing Clutch 30

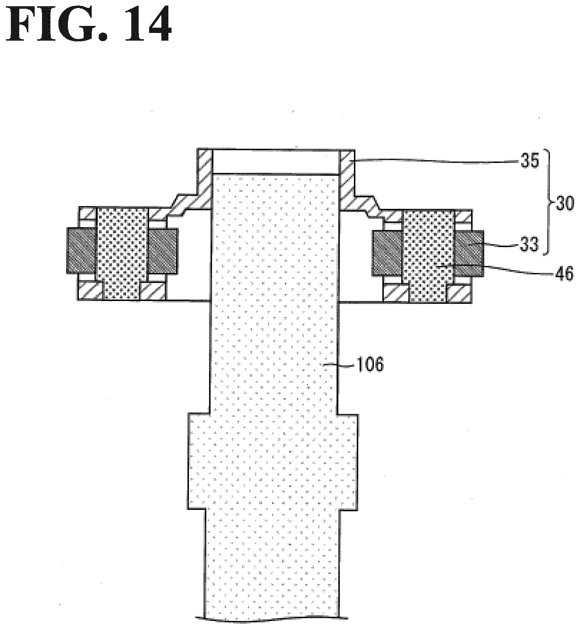

Next, a method for producing the clutch 30 will be described. FIGs. 14 to 16 are diagrams each illustrating a step of the method for producing the clutch 30 according to one embodiment. In the method for producing the clutch 30, the carrier 35 is spline-fitted to the pinion shaft 106. First, as illustrated in FIG. 14, the first stage fitting of the carrier 35 and the pinion shaft 106 is performed (first fitting step). Thus, the carrier 35 is rotatably fitted to the pinion shaft 106.

Next, a rotational angle of the carrier 35 relative to the pinion shaft 106 is adjusted to position the planetary gears 33 coupled to the carrier 35 with respect to the sun gear 32 (adjustment step).

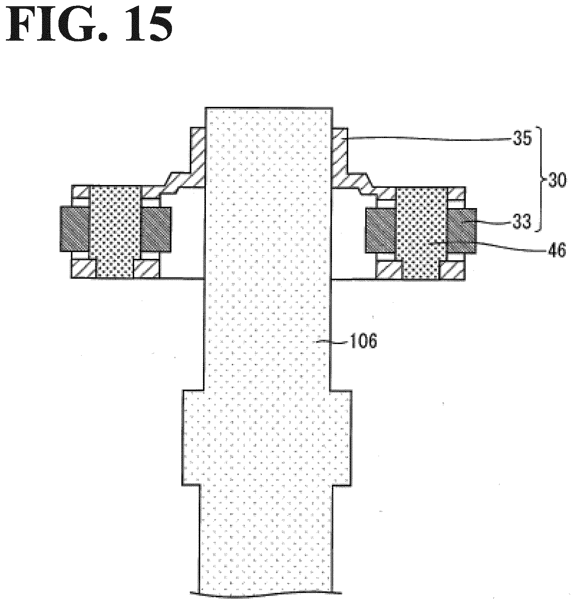

Then, as illustrated in FIG. 15, the carrier 35 is spline-fitted to the pinion shaft 106. Thus, the carrier 35 is fixed on the pinion shaft 106 and coupled in a torque transmittable manner.

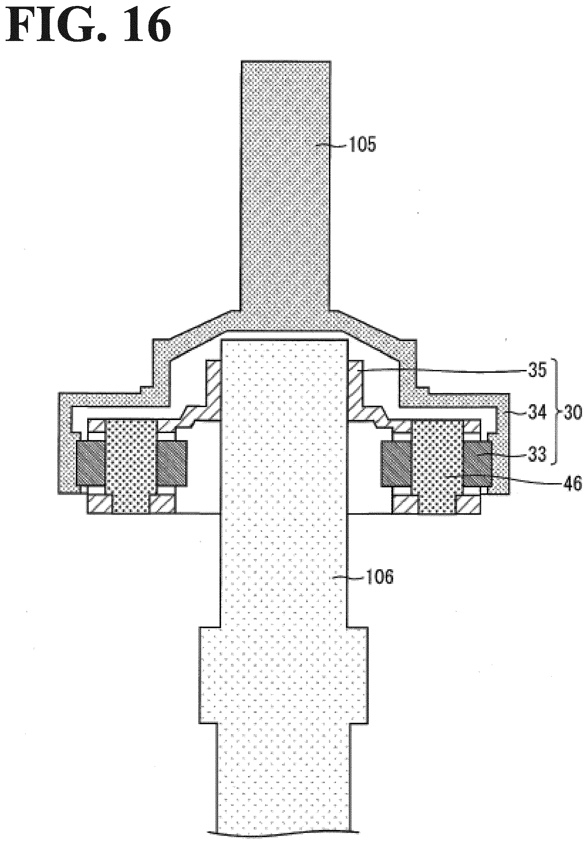

Finally, as illustrated in FIG. 16, after the input shaft 105 and the internal gear 34 are attached, the first housing 48 is attached to the second housing 49. This completes production of the clutch 30. Thus, the clutch 30 in a state illustrated in FIG. 3 can be obtained.

As described above, in the method for producing the clutch 30 according to the embodiment, in the first stage fitting, the carrier 35 is rotatably fitted to the pinion shaft 106. Preferably, while radial movement of the carrier 35 is restricted, the carrier 35 is rotated to position the planetary gears 33 with respect to the sun gear 32. After that, in the second stage fitting, the carrier 35 is fixed on the pinion shaft 106. Thus, while the planetary gears 33 supported by the carrier 35 are positioned, the carrier 35 can be readily spline-fitted to the pinion shaft 106. This facilitates production of the clutch 30.

In a method for producing the clutch including the planetary gear mechanism, when the carrier is spline-fitted to the output shaft, it is necessary to spline-fit the carrier to the output shaft while planetary gears supported by the carrier are correctly positioned. This makes assembly of the clutch difficult.

The embodiments provide a clutch readily producible, a steering device including the clutch, and a method for producing the clutch.

Obviously, numerous modifications and variations of the present invention are possible in light of the above teachings. It is therefore to be understood that within the scope of the appended claims, the present invention may be practiced otherwise than as specifically described herein.

## Claims

1. A clutch configured to mechanically establishing and disestablishing a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear;
a carrier configured to rotatably support the planetary gears and coupled to the output shaft in a torque transmittable manner, the carrier comprising a through hole through which the output shaft extends;
a first area disposed on an inner wall of the carrier defining the through hole;
a second area that is disposed on an outer surface of the output shaft and that is spline-fitted to the first area; and
a third area disposed at a position that is on the outer surface of the output shaft and that is closer to the input shaft than the second area is to the input shaft, the third area comprising a shape that makes the third area rotatable while being fitted to the first area.

2. The clutch according to claim 1, further comprising a fourth area disposed at a position that is on the inner wall of the carrier defining the through hole and that is closer to the input shaft than the first area is to the input shaft, the fourth area being spline-fitted to the third area.

3. A clutch configured to mechanically establishing and disestablishing a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear;
a carrier configured to rotatably support the planetary gears and coupled to the output shaft in a torque transmittable manner, the carrier comprising a through hole through which the output shaft extends;
a third area disposed on an outer surface of the output shaft;
a fourth area that is disposed on an inner wall of the carrier defining the through hole and that is spline-fitted to the third area; and
a first area disposed at a position that is on the inner wall of the carrier defining the through hole and that is farther away from the input shaft than the fourth area is from the input shaft, the first area comprising a shape that makes the first area rotatable while being fitted to the third area.

4. The clutch according to claim 1, wherein the third area comprises a shape that is fitted to the first area and that restricts movement of the output shaft in a radial direction of the output shaft.

5. A steering device comprising
a clutch configured to mechanically establishing and disestablishing a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear;
a carrier configured to rotatably support the planetary gears and coupled to the output shaft in a torque transmittable manner, the carrier comprising a through hole through which the output shaft extends;
a first area disposed on an inner wall of the carrier defining the through hole;
a second area that is disposed on an outer surface of the output shaft and that is spline-fitted to the first area; and
a third area disposed at a position that is on the outer surface of the output shaft and that is closer to the input shaft than the second area is to the input shaft, the third area comprising a shape that makes the third area rotatable while being fitted to the first area.

6. A method for producing a clutch configured to mechanically establishing and disestablishing a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear;
a carrier configured to rotatably support the planetary gears and coupled to the output shaft in a torque transmittable manner, the carrier comprising a through hole through which the output shaft extends;
a first area disposed on an inner wall of the carrier defining the through hole;
a second area that is disposed on an outer surface of the output shaft and that is spline-fitted to the first area; and
a third area disposed at a position that is on the outer surface of the output shaft and that is closer to the input shaft than the second area is to the input shaft, the third area comprising a shape that makes the third area rotatable while being fitted to the first area,
the method comprising:
fitting the first area and the third area to each other;
after the fitting step, adjusting a rotational angle of the carrier relative to the output shaft; and
after the adjusting step, spline-fitting the output shaft and the carrier to each other.

7. The clutch according to claim 2, wherein the third area comprises a shape that is fitted to the first area and that restricts movement of the output shaft in a radial direction of the output shaft.

8. The clutch according to claim 3, wherein the third area comprises a shape that is fitted to the first area and that restricts movement of the output shaft in a radial direction of the output shaft.
